# EUROPEAN PATENT APPLICATION

(11) **EP 4 806 638 A1**
(43) Date of publication of application: **16.09.2026**
(21) Application number: 24888715.0
(22) Date of filing: 06.11.2024
(51) Int. Cl.: B32B 27/32, B65D 65/40

(54) **LAMINATE AND PACKAGING CONTAINER**

(30) Priority: 06.11.2023 JP 2023189438
(71) Applicant: Toyo Seikan Co., Ltd., Tokyo 141-8640 (JP)
(72) Inventor: YOSHIKAWA, Seishi, Yokohama-shi, Kanagawa 230-0001 (JP); IMODA, Daisuke, Yokohama-shi, Kanagawa 230-0001 (JP); FUNAOKA, Shinichirou, Yokohama-shi, Kanagawa 230-0001 (JP); KUROSAWA, Takahiro, Yokohama-shi, Kanagawa 230-0001 (JP)
(74) Representative: J A Kemp LLP
(86) International application number: PCT/JP2024/039346
(87) International publication number: WO 2025/100420

(57) **Abstract**

Provided is a laminate that is used when the contents contained in a packaging container using the laminate significantly change in quality or deteriorate due to moisture but do not significantly change in quality or deteriorate due to oxygen, the laminate being capable of reducing manufacturing cost and exhibiting excellent recyclability after use. A laminate includes at least a first base layer, a water vapor barrier layer, and a heat-sealing layer laminated in this order from an outer side to an inner side. The first base layer and the heat-sealing layer are made of polyolefin.

## Description

### Technical Field

The present invention relates to a laminate used for manufacturing a packaging container or the like. The present invention also relates to a packaging container using the laminate.

### Background Art

In the related art, flexible packaging containers made of resin in various forms for filling and packaging various beverages, foods, liquid detergents, cosmetics, pharmaceuticals, sundries, industrial materials, and other items have been proposed.

For example, Patent Document 1 proposes a laminate including a light-shielding printed layer and a barrier coat layer, in which a polyolefin such as polyethylene or polypropylene is used for a sealant layer, and a packaging bag using the laminate, and it is said that the they not only have strength and heat resistance required at the time of use, but also have excellent recyclability after use, gas barrier properties, and the like from the viewpoint of environmental consideration.

Here, with regard to the barrier properties, when the packaging container is stored in a general atmospheric environment, it is important to focus on the oxygen barrier properties and the water vapor barrier properties. When the contents contained in the packaging container easily change in quality or deteriorate due to both of oxygen and moisture in the atmosphere, such as general foods, both of the oxygen barrier properties and the water vapor barrier properties must be regarded as important. However, when the contents greatly change in quality or deteriorate due to moisture but do not greatly change in quality or deteriorate due to oxygen, such as powders like sugar, salt, and sports drink powder, the packaging container may have high water vapor barrier properties and does not need to have high oxygen barrier properties.

When both the oxygen barrier properties and the water vapor barrier properties are considered important, a coating film having high gas barrier properties is often used, for example, the barrier coat layer of Patent Document 1 is formed of a gas barrier coating film, and there is a limit to the reduction in the manufacturing cost of the packaging container. In the case where the content contained in the packaging container is required to have only the high water vapor barrier properties, the use of the gas barrier coating film or the like causes a problem that the gas barrier properties of the packaging container become excessive performance, and the manufacturing cost of the packaging container becomes higher than necessary.

### Citation List

### Patent Literature

Patent Document 1: JP 2020-157516 A

### Summary of Invention

### Technical Problem

In view of the above circumstances, an object of the present invention is to provide a laminate that is used when the contents contained in a packaging container using the laminate significantly change in quality or deteriorate due to moisture but do not significantly change in quality or deteriorate due to oxygen, the laminate being capable of reducing the manufacturing cost and exhibiting excellent recyclability after use.

A second object of the present invention is to provide a packaging container using the laminate.

### Solution to Problem

An embodiment of the present invention provides a laminate including: at least a first base layer, a water vapor barrier layer, and a heat-sealing layer laminated in this order from an outer side to an inner side, the first base layer and the heat-sealing layer being made of polyolefin.

The laminate preferably includes a light-shielding layer between the first base layer and the water vapor barrier layer.

The laminate preferably includes, between the light-shielding layer and the water vapor barrier layer, a second base layer made of polyolefin.

The laminate preferably includes a normal printed layer between the first base layer and the light-shielding layer.

In the laminate, the light-shielding layer is preferably a light-shielding printed layer or an inorganic vapor-deposited layer.

The laminate preferably has a visible light transmittance of 90% or less.

In the laminate, preferably, the polyolefin of the heat-sealing layer has a xylene-soluble fraction percentage of 10 to 20 mass% and is subjected to stretching processing.

In the laminate, the polyolefin of the heat-sealing layer preferably has a peak intensity ratio that, as observed by X-ray diffraction measurement, satisfies MD/TD > 1 or TD/MD > 1.

In the laminate, the polyolefin of the first base layer and/or the second base layer preferably has a peak intensity ratio that, as observed by X-ray diffraction measurement, satisfies MD/TD > 1 or TD/MD > 1.

The polyolefin of the first base layer and/or the second base layer preferably has a thermal shrinkage rate that, as observed by thermal shrinkage rate measurement, satisfies MD > TD or MD < TD.

In the laminate, the polyolefin of the second base layer is preferably half-cut to a depth of 10 to 90% in a thickness direction.

An embodiment of the present invention provides a packaging container including the laminate.

### Advantageous Effects of Invention

The laminate of the present invention is a laminate including: at least a first base layer, a water vapor barrier layer, and a heat-sealing layer laminated in this order from an outer side to an inner side, wherein the first base layer and the heat-sealing layer are made of polyolefin, and a packaging container including the laminate. Therefore, when the contents contained in the packaging container significantly change in quality or deteriorate due to moisture, such as sugar, salt, or sports drink powder, but do not significantly change in quality or deteriorate due to oxygen, the gas barrier properties of the packaging container do not become excessive, and a low-cost packaging container can be obtained. Here, the moisture is a numerical value that represents the amount of water contained in the atmosphere in the form of water vapor as a ratio, and represents the degree of wetness of the atmosphere.

Since the first base layer and the heat-sealing layer are a laminate made of polyolefin, a laminate can have excellent recyclability when the water vapor barrier layer is constituted by a material that can be recycled together with polyolefin.

### Brief Description of Drawings

FIG. 1 is a schematic cross-sectional side view illustrating a layer structure of a laminate according to a first embodiment of the present invention.
FIG. 2 is a schematic cross-sectional side view illustrating a layer structure of a laminate according to a second embodiment of the present invention.
FIG. 3 is a schematic cross-sectional side view illustrating a layer structure of a laminate according to a third embodiment of the present invention.
FIG. 4 is a schematic cross-sectional side view illustrating a layer structure of a laminate according to a fourth embodiment of the present invention.
FIG. 5 is a schematic cross-sectional side view illustrating a layer structure of a packaging container formed using the laminate of the first embodiment of FIG. 1.
FIG. 6 is a graph of weight change in a storage stability test using Examples 1, 2, and 3 and Comparative Examples 1 and 2.

### Description of Embodiments

### Laminate

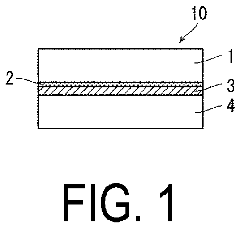

FIG. 1 is a schematic cross-sectional side view illustrating a layer structure of a laminate 10 according to a first embodiment in the present invention, in which a first base layer 1, a water vapor barrier layer 3, and a heat-sealing layer 4 are laminated in this order from an upper portion which is an outer side toward a lower portion which is an inner side. Here, the first base layer 1 and the heat-sealing layer 4 are each formed of a single layer or a plurality of layers of polyolefin. Among polyolefins, polyethylene or polypropylene is preferably used because of its easy recycling.

As the polyethylene, any of known polyethylenes such as high-density polyethylene (HDPE), medium-density polyethylene (MDPE), low-density polyethylene (LDPE), linear low-density polyethylene (LLDPE), and mixtures thereof can be used. In addition, as for the origin of the raw material, any of those derived from petroleum raw materials, derived from plant raw materials, derived from recycled polyethylene, and mixtures thereof can be used. For the heat-sealing layer 4, any of low-density polyethylene (LDPE), linear low-density polyethylene (LLDPE), and mixtures thereof is preferably used, which are excellent in heat sealability, and it is particularly preferable to use linear low-density polyethylene (LLDPE).

In addition, a lubricant, an ultraviolet absorber, a plasticizer, a crystal nucleating agent, a filler, a hydrolysis inhibitor, a flame retardant, an antistatic agent, an antifogging agent, or an anti-blocking agent may be blended as long as the physical properties are not impaired.

As the polypropylene, any of known polypropylenes such as non-oriented polypropylene (CPP) and biaxially oriented polypropylene (OPP) using homopolypropylene which is a homopolymer of polypropylene, random polypropylene which is a random copolymer with ethylene, high-impact polypropylene in which a rubber component (EPR) is uniformly and finely dispersed in homopolypropylene or random polypropylene, and the like, and as for the origin of the raw material, any of those derived from petroleum raw materials, derived from plant raw materials, derived from recycled polypropylene, and mixtures thereof can be used. It is preferable to use non-oriented polypropylene (CPP) having excellent heat sealability for the heat-sealing layer 4.

The thickness of the first base layer 1 is 5 to 40 µm, preferably 8 to 30 µm, and more preferably 9 to 25 µm. If the thickness thereof is less than 5 µm, it may be difficult to manufacture a laminate, and if the thickness is more than 40 µm, flexibility may not be exhibited when used in a packaging container.

From the viewpoint of excellent recyclability, the resin of the first base layer 1 is preferably composed only of polyolefin. However, for the purpose of enhancing the rigidity, puncture strength, gas barrier properties, and the like of the film, the first base layer 1 may contain a resin other than polyolefin, such as a polyamide resin, a polyester resin, a polyvinyl alcohol-based resin, or an ethylene-vinyl alcohol copolymer resin having an ethylene content of 20 to 50 mol%, in an amount of 20 mass% or less, preferably 10 mass% or less, based on the entire first base layer 1.

The thickness of the heat-sealing layer 4 is 10 to 300 µm, preferably 20 to 200 µm, and more preferably 25 to 150 µm. If the thickness thereof is less than 10 µm, the heat-sealing properties may not be exhibited, and if the thickness is more than 300 µm, the flexibility may not be exhibited when used in a packaging container. The heat-sealing layer 4 may contain a recycled resin that can be used as a heat-sealing layer.

Since the polyolefin has a certain degree of water vapor permeability, for the purpose of blocking the water vapor permeation of the laminate 10, the water vapor barrier layer 3 is provided on an upper surface of the heat-sealing layer 4. The water vapor barrier layer 3 may be a vapor-deposited film of an inorganic substance or an inorganic oxide, or may be a coating film in which an inorganic substance or an inorganic oxide is dispersed. In the case of a vapor-deposited film, a known deposition means or method such as chemical vapor deposition (CVD) is used, and in the case of a coating film, a known coating means or method such as roll coating, spin coating, or dip coating is used, thereby forming the vapor-deposited film or coating film of the inorganic substance or inorganic oxide in close contact with the upper surface of the heat-sealing layer 4.

As the inorganic substance, an inorganic substance such as silicon (Si), aluminum (Al), magnesium (Mg), calcium (Ca), potassium (K), tin (Sn), sodium (Na), boron (B), titanium (Ti), lead (Pb), zirconium (Zr), yttrium (Y), or the like may be used, but aluminum (Al) is preferable as a substance suitable for a packaging container.

As the inorganic oxide, those represented by MO_{X} such as SiO_{X} and AlO_{X} (wherein M represents an inorganic element, and the range of the value of X varies depending on the inorganic element) can be used. Here, the value of X can range from 0 to 2 for silicon (Si), 0 to 1.5 for aluminum (Al), 0 to 1 for magnesium (Mg), 0 to 1 for calcium (Ca), 0 to 0.5 for potassium (K), 0 to 2 for tin (Sn), 0 to 0.5 for sodium (Na), 0 to 1.5 for boron (B), 0 to 2 for titanium (Ti), 0 to 1 for lead (Pb), 0 to 2 for zirconium (Zr), and 0 to 1.5 for yttrium (Y). However, in the case where X = 0 in the above, the compound is a complete inorganic substance and is not an inorganic oxide and is thus excluded. As a material suitable for the packaging container, silicon oxide or aluminum oxide is preferable, and SiO₂ or AlO₂ is particularly preferable because of its transparent appearance.

The thickness of the water vapor barrier layer 3 is 1 to 150 nm, preferably 5 to 60 nm, more preferably 10 to 40 nm. If the thickness thereof is less than 1 nm, it may be difficult to block the permeation of water vapor through the laminate 10. If the thickness thereof exceeds 150 nm, cracks may occur in the vapor-deposited film of the water vapor barrier layer 3, and recycling of the laminate 10 may become difficult.

In the laminate 10 according to the first embodiment, the first base layer 1 and the water vapor barrier layer 3 are bonded to each other by an adhesive layer 2. Here, the adhesive layer 2 is not essential and is a layer that is optionally provided, and the adhesive layer 2 is not necessary if the first base layer 1 and the water vapor barrier layer 3 are bonded by heating or the like. However, if the first base layer 1 and the water vapor gas barrier layer are bonded by the heating or the like, they easily peel off, so that the adhesive layer 2 is preferably used to ensure the adhesion.

As an adhesive used for the adhesive layer 2, a known solvent-free adhesive or a solvent-type adhesive, but from the viewpoint of environmental load, it is preferable to use a solvent-free adhesive.

Examples of the solvent-free adhesive include a urethane-based adhesive, an epoxy-based adhesive, a polyether-based adhesive, a polyester-based adhesive, and a silicone-based adhesive, and a urethane-based adhesive is preferably used because it has high adhesive strength and can flexibly cope with deformation of the shape of the packaging container.

Examples of the solvent-type adhesive include a urethane-based adhesive, an acrylic-based adhesive, a rubber-based adhesive, a vinyl-based adhesive, a silicone-based adhesive, an epoxy-based adhesive, a phenol-based adhesive, and an olefin-based adhesive.

The thickness of the adhesive layer 2 is 0.1 to 10 µm, preferably 1 to 5 µm, and more preferably 1 to 3 µm. If the thickness thereof is less than 0.1 µm, sufficient adhesive strength may not be obtained. If the thickness thereof is more than 10 µm, it may not flexibly cope with the deformation of the shape of the packaging container, and recycling of the laminate 10 may become difficult.

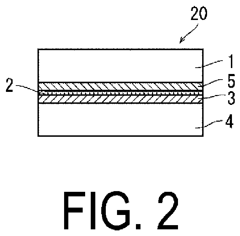

FIG. 2 is a schematic cross-sectional side view illustrating a layer structure of a laminate 20 according to a second embodiment of the present invention, and in addition to the layer structure of the laminate 10 of the first embodiment, a light-shielding layer 5 is laminated between the first base layer 1 and the adhesive layer 2.

The light-shielding layer 5 has, by shielding light such as ultraviolet rays and visible light existing further outside of the upper first base layer 1 which is the outer side of the laminate 20, an effect and a function of preventing denaturation, deterioration, and the like of the contents when the laminate 20 is used for a packaging container and improving storage stability.

As the light-shielding layer 5, either a light-shielding printed layer or an inorganic vapor-deposited layer can be used. The light-shielding printed layer is a layer provided by printing a single-color light-shielding ink on a lower surface of the first base layer 1, and the color of the light-shielding ink is not particularly limited, and may be black, white, gray, orange, red, yellow, silver, brown, or the like, and is preferably varied according to the type of the content. The coloring pigment used in the light-shielding ink is not particularly limited, and known pigments such as carbon black, acetylene black, lamp black, black smoke, iron black, aniline black, titanium oxide, and zinc oxide can be used. Furthermore, it may be used not only as a single layer but also as a multilayer including different color layers such as white and black layers, or yellow and red layers, as needed.

As a printing method of the light-shielding printed layer, a known printing method such as a gravure printing method, a flexographic printing method, an inkjet printing method, or an offset printing method can be used, but from the viewpoint of environmental load, the flexographic printing method is preferably used.

The thickness of the light-shielding printed layer is 0.1 to 10 µm, preferably 1 to 5 µm, and more preferably 1 to 3 µm. If the thickness thereof is less than 0.1 µm, it may be impossible to prevent denaturation, deterioration, and the like of the contents and to improve the storage stability when used for a packaging container. If the thickness thereof is more than 10 µm, it may not flexibly cope with the deformation of the shape of the packaging container, and recycling of the laminate 10 may become difficult.

As the inorganic vapor-deposited layer, a vapor-deposited film of an inorganic substance described in the description of the water vapor barrier layer 3 can be used, and the vapor-deposited film is formed in close contact with the lower surface of the first base layer 1. With respect to the vapor deposition means, method, type of inorganic substance, thickness, and the like, the description regarding the vapor-deposited film of the inorganic substance of the water vapor barrier layer 3 is incorporated herein by reference. Therefore, the inorganic vapor-deposited layer has not only the effect and function as the light-shielding layer 5 but also the effect and function as the water vapor barrier layer 3. Here, as the type of the inorganic substance, aluminum (Al) is preferably used because it is suitable for a packaging container.

By employing the light-shielding layer 5, the visible light transmittance (380 to 800 nm) of the laminate of the present invention measured using an ultraviolet-visible spectrophotometer can be arbitrarily controlled to 90% or less, preferably 50% or less, and more preferably 10% or less. If the visible light transmittance thereof is more than 90%, the laminate 20 is substantially transparent, and the laminate 20 may not exhibit the effect and function of preventing denaturation, deterioration, and the like of the contents and improving the storage stability when used for a packaging container.

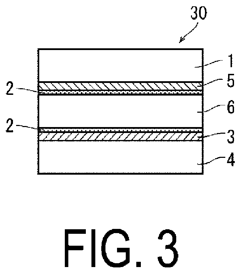

FIG. 3 is a schematic cross-sectional side view illustrating a layer structure of a laminate 30 according to a third embodiment of the present invention, in which, in addition to the layer structure of the laminate 20 of the second embodiment, the adhesive layer 2 is formed of two layers, and a second base layer 6 is laminated between the two adhesive layers 2.

The second base layer 6 may be formed of the same polyolefin as that of the first base layer 1, and therefore, the description of the polyolefin in the description of the first base layer 1 is incorporated herein by reference. By laminating the second base layer 6, the laminate of the present invention can obtain higher water vapor barrier properties.

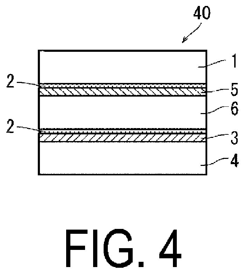

FIG. 4 is a schematic cross-sectional side view illustrating a layer structure of a laminate 40 according to a fourth embodiment of the present invention, and in contrast to the layer structure of the laminate 30 of the third embodiment, the light-shielding layer 5 is not laminated on the lower surface of the first base layer 1, but the light-shielding layer 5 is laminated on an upper surface of the second base layer 6.

A normal printed layer 7 may be laminated on the lower surface of the first base layer 1, and the normal printed layer 7 can be a multicolor printed layer of characters such as a trade name, a pattern, an image, and the like. As a printing method of the light-shielding printed layer, a known printing method such as a gravure printing method, a flexographic printing method, an inkjet printing method, or an offset printing method can be used. By laminating the normal printed layer 7, added values such as improvement in distinguishability from products of other companies and improved product value can be imparted to the packaging container using the laminate of the present invention.

The means and method for laminating the light-shielding layer 5 on the upper surface of the second base layer 6 are the same as those in the case of laminating the light-shielding layer 5 on the lower surface of the first base layer 1 in the second embodiment, and therefore, the description regarding the means and method in the case of laminating the light-shielding layer 5 on the lower surface of the first base layer 1 is incorporated herein. In the case where the light-shielding layer 5 is the light-shielding printed layer, the light-shielding layer 5 may be laminated on a lower surface of the normal printed layer 7, instead of being laminated on the upper surface of the base layer 6.

The polyolefin of the heat-sealing layer 4 in the laminates 10, 20, 30, and 40 described in the first to fourth embodiments preferably has a xylene-soluble fraction percentage of 10 to 20 mass% and preferably has been subjected to a stretching processing. The xylene-soluble fraction percentage is more preferably 12 to 18 mass%. Here, the xylene-soluble fraction percentage is a dissolution ratio of the post-immersion mass with regard to the pre-immersion mass 100% when a polyolefin is immersed in xylene at room temperature, and is a physical property showing a correlation with the stretching processability. Therefore, when the xylene-soluble fraction percentage is within the above numerical range, the polyolefin of the heat-sealing layer 4 has appropriate stretching processability. If the xylene-soluble fraction percentage is less than 10 mass%, sufficient stretching processability may not be obtained, and if the xylene-soluble fraction percentage is more than 20 mass%, the blocking resistance of the polyolefin during storage may deteriorate.

The polyolefin of the heat-sealing layer 4 preferably has a peak intensity ratio of MD/TD > 1 or TD/MD > 1 as observed by X-ray diffraction measurement using Cu-Kα radiation, satisfies MD/TD > 1 or TD/MD > 1. As the peak, for example, peaks at 2θ = 14° or 17° derived from (110) or (040) of a polypropylene crystal is used. Here, MD means the stretching direction, and TD means the transverse direction perpendicular to the stretching direction. When the peak intensity ratio is MD/TD > 1 or TD/MD > 1, it indicates that the polyolefin of the heat-sealing layer is excellent in linear cuttability in the MD direction or the TD direction due to molecular orientation by stretching processing, and the laminate of the present invention can be easily torn with a small force.

The polyolefin of the first base layer 1 and/or the second base layer 6 preferably has a peak intensity ratio that, observed by the X-ray diffraction measurement, satisfies MD/TD > 1 or TD/MD > 1. Here, as in the heat-sealing layer, when the peak intensity ratio is MD/TD > 1 or TD/MD > 1, it indicates that the polyolefin of the first base layer and the second base layer is excellent in linear cuttability in the MD direction or the TD direction due to molecular orientation by stretching processing, and the laminate of the present invention can be easily torn with a small force.

The polyolefin of the first base layer 1 and/or the second base layer 6 preferably has a thermal shrinkage rate that, as observed by thermal shrinkage rate measurement, satisfies MD > TD or MD < TD. Here, the thermal shrinkage rate is measured using, for example, a thermomechanical analyzer (TMA). The thermal shrinkage rate is represented by (L0 - L)/L0 × 100 (%), where the initial dimension is represented by L0 and the dimension after heating to 120°C or 130°C is represented by L. A larger value indicates greater thermal shrinkage. When the thermal shrinkage rate is MD>TD or MD<TD, it indicates that the laminate is excellent in linear cuttability in the MD direction or the TD direction due to molecular orientation by the stretching processing, and the laminate of the present invention can be easily torn with a small force.

The polyolefin of the second base layer 6 is preferably half-cut to a depth of 10 to 90%, more preferably 20 to 80%, in the thickness direction. Here, the half-cut processing means a cutting processing in the thickness direction using a press blade, a laser, or the like, and the presence of the cutting processing enables the laminate of the present invention to be easily torn with a small force.

### Packaging Container

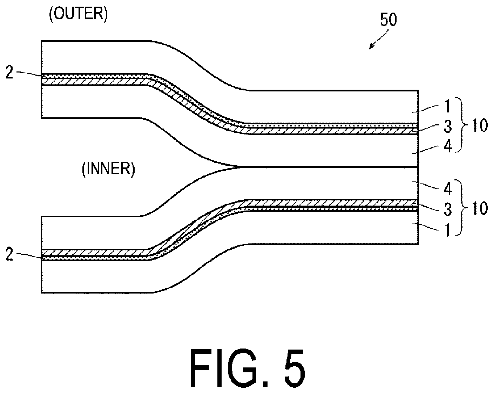

FIG. 5 is a schematic cross-sectional side view illustrating a layer structure of a packaging container 50 formed by using two laminates 10 of the first embodiment illustrated in FIG. 1, and fusing the right half of each laminate 10 using a heat sealer with the heat-sealing layer 4 inside. Here, the water vapor barrier layer 3 in each laminate 10 blocks the water vapor present outside the packaging container, and thus the content contained in the packaging container 50 can be stored for a long period of time while maintaining a dry state without being affected by moisture.

### Examples

The present invention will be described in detail with examples below. However, the present invention is not limited to the examples.

The methods for measuring the physical properties used in Examples and Comparative Examples are described below.

### Water vapor permeance

The laminate was used as a sample, and the water vapor permeance (g/m²/day/atm) was measured under conditions of 40°C and 90% RH using a water vapor permeance measurement device (PERMATRAN-W 3/34 G manufactured by Mocon).

### Visible light transmittance

The laminate was used as a sample, and the light transmittance (%) at 380 to 800 nm was measured using an ultraviolet visible near-infrared spectrophotometer (UV-3600 manufactured by Shimadzu Corporation).

### Storage stability test

A packaging container prepared by heat-sealing two sheets of the laminate and filled with 50 g of sports drink powder was used as a sample, and subjected to a storage stability test for 90 days under the conditions of 30°C/80% RH using a constant temperature and high moisture chamber, and the weight (mg) of the packaging container was appropriately measured during the 90 days. The water vapor barrier property was evaluated by the increase in weight when moisture was absorbed.

The types of films used in Examples and Comparative Examples are shown below.

### Film

(A) Base layer film A: Biaxially oriented polypropylene (OPP) was used as a base layer film A. Thickness 20 µm
(B) Base layer film B with light-shielding layer (light-shielding printed layer): A film in which a white ink layer was formed on one surface of a base layer film by gravure printing and then a gray ink layer was formed thereon was used as a base layer film B with a light-shielding layer (light-shielding printed layer). Thickness 20 µm
(C) Base layer film C with a light-shielding layer (inorganic vapor-deposited layer): A film in which aluminum was vapor deposited on one surface of a base film was used as a base layer film C with a light-shielding layer (inorganic vapor-deposited layer). Thickness 25 µm
(D) Heat-sealing layer film D: Non-oriented polypropylene (CPP) was used as the heat-sealing layer film D. Thickness 40 µm
(E) Heat-sealing layer film E with water vapor barrier layer: A film in which silicon dioxide (SiO₂) was deposited on one surface of the heat-sealing layer film was used as a heat-sealing layer film E with water vapor barrier layer. Thickness 25 µm

### Example 1

In order to obtain the layer structure of the laminate 10 of the first embodiment illustrated in FIG. 1, the base layer film A was used as the base layer 1 on the outer side, and a urethane-based adhesive was applied to the inner surface of the base layer film A by a bar coater in an application amount of about 4 g/m², thereby forming a urethane-based adhesive layer as the adhesive layer 2. In a state where the urethane-based adhesive layer was semi-dried, the heat-sealing layer film with a water vapor barrier layer E was bonded as the water vapor barrier layer 3 and the heat-sealing layer 4 such that the water vapor barrier layer faced the adhesive layer, thereby manufacturing a laminate of Example 1. The laminate of Example 1 can be represented as "OPP (1)/urethane adhesive layer (2)/SiO₂ vapor-deposited layer (3)/CPP (4)", where the numerical values in parentheses indicate that the layers correspond to "1: first base layer", "2: adhesive layer", "3: water vapor barrier layer", "4: heat-sealing layer", "5: light-shielding layer", and "6: second base layer", respectively.

The laminate of Example 1 was used as a sample to measure the water vapor permeance and the visible light transmittance, and the measurement results are shown in Table 2.

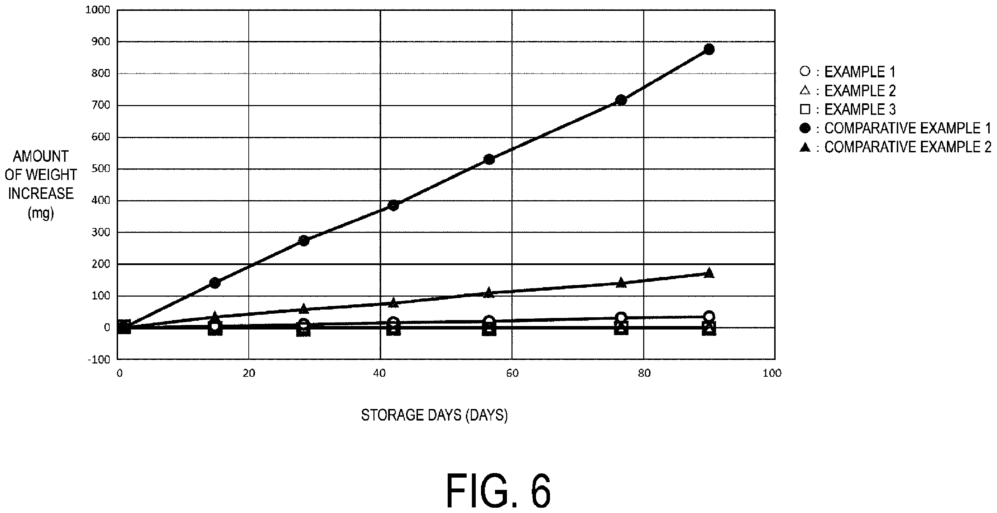

Two sheets of the laminate of Example 1 were used, with the heat-sealing layer of each sheet facing inward, and sealed using a heat sealer under conditions of 180°C, 0.3 MPa, and 1.0 seconds to manufacture a packaging container having an inner dimension of 100 mm (length) × 100 mm (width) with only one side being open. Subsequently, 50 g of the sports drink powder was filled from the opened side of the packaging container, and then the packaging container was sealed with the heat sealer under the same conditions as described above. The storage stability test was performed using the sealed packaging container as a sample, and the measurement results are shown in FIG. 6.

### Example 2

A laminate of Example 2 was manufactured in the same manner as in Example 1 except that the base layer film B with a light-shielding layer (light-shielding printed layer) in which the base layer is used on the outer side, the urethane-based adhesive, the base layer film A, the urethane-based adhesive, and the heat-sealing layer film E with a water vapor barrier layer were used so as to have the layer structure of the laminate 30 of the third embodiment illustrated in FIG. 3. The laminate of Example 2 can be represented as "OPP (1)/light-shielding layer (light-shielding printed layer) (5)/urethane adhesive layer (2)/ OPP (6)/urethane adhesive layer (2)/SiO₂ vapor-deposited layer (3)/CPP (4)".

In the same manner as in Example 1, the laminate of Example 2 was used as a sample to measure the water vapor permeance and the visible light transmittance, and the measurement results are shown in Table 2. Further, a storage stability test was performed using two sheets of the laminate of Example 2 and a packaging container filled with a sports drink powder as a sample, and the measurement results are shown in FIG. 6.

### Example 3

A laminate of Example 3 was manufactured in the same manner as in Example 1 except that the base layer film A as the base layer 1 on the outer side, the urethane-based adhesive, the base layer film C with a light-shielding layer (inorganic vapor-deposited layer), and the heat-sealing layer film E with a urethane-based adhesive and a water vapor barrier layer were used so as to have the layer structure of the laminate 40 of the fourth embodiment illustrated in FIG. 4. The laminate of Example 2 can be represented as "OPP (1)/urethane adhesive layer (2)/light-shielding layer (inorganic vapor-deposited layer) (5)/OPP (6)/urethane adhesive layer (2)/SiO₂ vapor-deposited layer (3)/CPP (4)".

In the same manner as in Example 1, the laminate of Example 3 was used as a sample to measure the water vapor permeance and the visible light transmittance, and the measurement results are shown in Table 2. Further, a storage stability test was performed using two sheets of the laminate of Example 3 and a packaging container filled with a sports drink powder as a sample, and the measurement results are shown in FIG. 6.

### Comparative Examples 1 and 2

Laminates of Comparative Examples 1 and 2 were manufactured in the same manner as in Examples 1 and 3, respectively, except that, by using the heat-sealing layer film D instead of the heat-sealing layer film E with a water vapor barrier layer in the laminates of Examples 1 and 3, the "SiO₂ vapor-deposited film (3)" corresponding to the water vapor barrier layer was not included.

The laminate of Comparative Examples 1 and 2 were used as a sample to measure the water vapor permeance and the visible light transmittance, and the measurement results are shown in Table 2. Further, a storage stability test (evaluation of water vapor barrier properties) was performed using two laminates of each of Comparative Examples 1 and 2 and a packaging container filled with a sports drink powder as a sample, and the measurement results are shown in FIG. 6.

The layer constitutions of Examples 1 to 3 and Comparative Examples 1 and 2 are shown in Table 1.

**[Table 1]**

| | Material and layer constitution of laminate used for packaging container |
|---|---|
| Example 1 | OPP (1)/urethane adhesive (2)/ SiO₂ vapor-deposited film (3)/CPP (4) |
| Example 2 | OPP (1)/light-shielding layer (light-shielding printed layer) (5)/urethane adhesive layer (2)/OPP (6)/urethane adhesive layer (2)/SiO₂ vapor-deposited layer (3)/CPP (4) |
| Example 3 | OPP (1)/urethane adhesive layer (2)/light-shielding layer (inorganic vapor-deposited layer) (5)/OPP (6)/urethane adhesive layer (2)/SiO₂ vapor-deposited layer (3)/CPP (4) |
| Comparative Example 1 | OPP (1)/urethane adhesive (2)/CPP (4) |
| Comparative Example 2 | OPP (1)/urethane adhesive layer (2)/light-shielding layer (inorganic vapor-deposited layer) (5)/OPP (6)/urethane adhesive layer (2)/CPP (4) |

| | |
|---|---|
| 1) 1: First base layer 2: Adhesive layer 3: Water vapor barrier layer 4: Heat-sealing layer 5: Light-shielding layer 6: Second base layer 2) OPP: Biaxially oriented polypropylene CPP: Non-oriented polypropylene | |

Table 2 shows the measurement results of the water vapor permeance and the visible light transmittance of Examples 1 to 3 and Comparative Examples 1 and 2.

**[Table 2]**

| | Water vapor permeance (g/m²/day/atm) | Visible light transmittance (%) |
|---|---|---|
| Example 1 | Less than 0.2 | 93 |
| Example 2 | Less than 0.2 | 41 |
| Example 3 | Less than 0.2 | 0.8 |
| Comparative Example 1 | Greater than 1 | 92 |
| Comparative Example 2 | 0.4 | 0.9 |

The water vapor permeance (g/m²/day/atm) of the laminates of Examples 1 to 3 in Table 2 was less than 0.2 in all cases, and water vapor hardly permeated, but Comparative Examples 1 and 2 were "greater than 1" and "0.4", respectively, and it was observed that water vapor permeated to some extent. In the layer constitution of "Example/ Comparative Example", the laminates of "Example 1/Comparative Example 1" and "Example 3/Comparative Example 2" differ in the presence of the SiO₂ vapor-deposited film which is a water vapor barrier layer. However, the visible light transmittance was substantially the same at "93/92" and "0.8/0.9", respectively, and therefore, it can be seen that the SiO₂ vapor-deposited film is transparent to the extent that it does not affect the visible light transmittance.

In the storage stability test for 90 days illustrated in FIG. 6, the packaging container of Example 1 had slightly increased in weight, but the packaging containers of Examples 2 and 3 had hardly increased in weight. Therefore, it can be seen that the packaging containers of Examples 1 to 3 have high water vapor barrier properties. In contrast, the packaging containers of Comparative Examples 1 and 2 absorbed moisture in the environment, and showed a large weight increase. After storage for 90 days, each packaging container was opened, and the sports drink powders of Examples 1 to 3 maintained the same dry state as when filled, and no aggregation due to moisture was observed. However, in Comparative Examples 1 and 2, the sports drink powder was aggregated due to moisture, and in particular, in Comparative Example 1, it was observed that the sports drink powder was strongly aggregated.

### Industrial Applicability

The laminate of the present invention is a laminate including: at least a first base layer, a water vapor barrier layer, and a heat-sealing layer laminated in this order from an outer side to an inner side, wherein the first base layer and the heat-sealing layer are made of polyolefin, and a packaging container using the laminate. When the contents contained in the packaging container significantly change in quality or deteriorate due to moisture, such as sugar, salt, or sports drink powder, but do not significantly change in quality or deteriorate due to oxygen, the gas barrier properties of the packaging container do not become excessive, and a low-cost packaging container can be obtained. Since the first base layer and the heat-sealing layer are a laminate made of polyolefin, a laminate and packaging container can have excellent recyclability when the water vapor barrier layer is constituted by a material that can be recycled together with polyolefin.

### Reference Signs List

1 First base layer
2 Adhesive layer
3 Water vapor barrier layer
4 Heat-sealing layer
5 Light-shielding layer
6 Second base layer
10 Laminate of first embodiment
20 Laminate of second embodiment
30 Laminate of third embodiment
40 Laminate of fourth embodiment
50 Packaging container

## Claims

1. A laminate, comprising
at least a first base layer, a water vapor barrier layer, and a heat-sealing layer laminated in this order from an outer side to an inner side, wherein
the first base layer and the heat-sealing layer are made of polyolefin.

2. The laminate according to claim 1, comprising a light-shielding layer between the first base layer and the water vapor barrier layer.

3. The laminate according to claim 2, comprising, between the light-shielding layer and the water vapor barrier layer, a second base layer made of polyolefin.

4. The laminate according to claim 2, comprising a normal printed layer between the first base layer and the light-shielding layer.

5. The laminate according to claim 2, wherein the light-shielding layer is a light-shielding printed layer or an inorganic vapor-deposited layer.

6. The laminate according to claim 2, wherein the laminate has a visible light transmittance of 90% or less.

7. The laminate according to claim 1, wherein the polyolefin of the heat-sealing layer has a xylene-soluble fraction percentage of 10 to 20 mass% and is subjected to stretching processing.

8. The laminate according to claim 1, wherein the polyolefin of the heat-sealing layer has a peak intensity ratio that, as observed by X-ray diffraction measurement, satisfies MD/TD > 1 or TD/MD > 1.

9. The laminate according to claim 3, wherein the polyolefin of the first base layer and/or the second base layer has a peak intensity ratio that, as observed by X-ray diffraction measurement, satisfies MD/TD > 1 or TD/MD > 1.

10. The laminate according to claim 3, wherein the polyolefin of the first base layer and/or the second base layer has a thermal shrinkage rate that, as observed by thermal shrinkage rate measurement, satisfies MD > TD or MD < TD.

11. The laminate according to claim 3, wherein the polyolefin of the second base layer is half-cut to a depth of 10 to 90% in a thickness direction.

12. A packaging container comprising the laminate according to any one of claims 1 to 11.
